(19) **Europäisches Patentamt** / **European Patent Office** / **Office européen des brevets**

(11) **EP 4 645 569 A1**

(12) # EUROPEAN PATENT APPLICATION

(43) Date of publication:
**05.11.2025 Bulletin 2025/45**

(21) Application number: **25173006.5**

(22) Date of filing: **28.04.2025**

(51) International Patent Classification (IPC):
*H01M 50/457* (2021.01)   *H01M 50/446* (2021.01)
*H01M 50/414* (2021.01)   *C08L 63/00* (2006.01)
*C08L 33/02* (2006.01)   *C08L 29/04* (2006.01)
*C08L 23/12* (2006.01)   *H01M 50/403* (2021.01)
*H01M 50/429* (2021.01)   *H01M 10/0525* (2010.01)

(52) Cooperative Patent Classification (CPC):
(C-Sets available)
**H01M 50/403; C08L 33/02; C08L 63/00;**
**C09D 127/06; C09D 133/20; C09D 133/26;**
**C09D 179/08; H01M 50/414; H01M 50/4295;**
**H01M 50/446; H01M 50/457;** C08L 2205/03;
C08L 2205/035; H01M 10/0525; H01M 2300/004

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.04.2024 CN 202410549312**
**17.05.2024 CN 202410622507**
**05.08.2024 PCT/CN2024/109815**

(71) Applicant: **Eve Power Co., Ltd.**
**Jingmen, Hubei 448000 (CN)**

(72) Inventors:
• **LIU, Fanfen**
**Jingmen, 448000 (CN)**
• **ZHOU, Zhixing**
**Jingmen, 448000 (CN)**
• **YUAN, Dingding**
**Jingmen, 448000 (CN)**
• **HE, Wei**
**Jingmen, 448000 (CN)**

(74) Representative: **Mewburn Ellis LLP**
**Aurora Building**
**Counterslip**
**Bristol BS1 6BX (GB)**

(54) **COMPOSITE SEPARATOR, PREPARATION METHOD AND APPLICATION THEREOF**

(57)   Disclosed in the present disclosure is a composite separator and a preparation method and application thereof. A composite separator includes a porous base film (1) and a coating (2). The coating (2) is provided on a surface of the porous base film (1), the coating (2) includes a base layer (21) and a non-adhesive polymer C (22) provided on the base layer (21), and the base layer (21) includes inorganic particles A and an adhesive polymer B. A maximum particle size of the non-adhesive polymer C (22) is greater than a thickness of the base layer (21) and a particle size of the non-adhesive polymer C (22) is in a range of 0.3 $\mu$m to 30 $\mu$m. The adhesive polymer B includes a first component and a second component. The first component includes at least one of a vinyl polymer, a propylene-based polymer, an amide-based polymer, and an epoxy-based polymer. The second component includes a cellulose-based polymer.

Fig. 1

(52) Cooperative Patent Classification (CPC): (Cont.)

C-Sets
**C09D 127/06, C08L 27/16, C08L 29/04,
C08L 1/286, C08K 3/22;
C09D 133/26, C08L 1/286, C08L 33/20, C08K 3/22**

**Description**

## TECHNICAL FIELD

The present disclosure relates to the technical field of lithium batteries, and in particular, to a composite separator, a preparation method and an application thereof.

## BACKGROUND

A separator, as a key safety component of a lithium-ion battery, has a rich pore structure, and is used to block the direct contact between the positive electrode sheet and the negative electrode sheet while allowing ions to pass through. In a conventional separator, a mixture of an adhesive polymers and inorganic particles are coated on the surface of a polyolefin base film to form a porous active layer, and the inorganic particles in the porous active layer are fixed to each other by the adhesive polymer.

There is no adhesion between the porous active layer and the electrode sheet of the conventional separator, which may reduce the cooperation stability between the separator and the electrode sheet in the cell, and with an increase in an electrode area and a size of the cell of the battery, the problem of the poor cooperation stability between the separator and the electrode sheet in the cell may be further enlarged, which may lead to an increase in a looseness degree of the cell and a decrease in the mechanical strength of the cell. The increase in the looseness degree of the cell may lead to that the cell fails to be inserted into a housing, and the poor mechanical strength of the cell may lead to the folding of the electrode sheet. The decrease in the mechanical strength of the cell may lead to wrinkles of the electrode sheet. In addition, during a charging or discharging process of the lithium-ion battery, the expansion of the electrode sheet may lead to an increased degree of deformation of the cell, which may seriously affect the cycle performance of the lithium-ion battery.

## SUMMARY

In a first aspect, provided in the present disclosure is a composite separator and the following technical solutions are used.

A composite separator includes a porous base film and a coating. The coating is provided on a surface of the porous base film, the coating includes a base layer and a non-adhesive polymer C provided on the base layer, and the base layer includes inorganic particles A and an adhesive polymer B.

A maximum particle size of the non-adhesive polymer C is greater than a thickness of the base layer and a particle size of the non-adhesive polymer C is in a range of 0.3 $\mu$m to 30 $\mu$m.

The adhesive polymer B includes a first component and a second component; the first component includes at least one of a vinyl polymer, a propylene-based polymer, an amide-based polymer, and an epoxy-based polymer; and the second component includes a cellulose-based polymer.

The vinyl polymer includes at least one of polyvinylidene fluoride, polyvinylidene fluoride-co-trichloroethylene, polyvinyl acetate, polyethylene-co-vinyl acetate, polyvinyl alcohol, polyvinylpyrrolidone, and polymaleic anhydride.

The propylene-based polymer includes at least one of polymethyl methacrylate and polyacrylonitrile.

The amide-based polymer includes at least one of polyimide, acrylamide, methacrylamide, hydroxymeth acrylamide, diacetone acrylamide, N,N-diethylacrylamide, N,N-diethylmethacrylamide, N-ethylacrylamide, N-ethylmethacrylamide, N,N-dimethylacrylamide, N,N-dimethylacrylamide, N-methylacrylamide, N-isopropylacrylamide, N-isopropylmethacrylamide, and 2-acrylamido-2-phenylethanesulfonic acid.

The epoxy-based polymer includes at least one of polyethylene oxide and polypropylene oxide.

The cellulose-based polymer includes at least one of sodium carboxymethyl cellulose and lithium carboxymethyl cellulose.

In a second aspect, provided in the present disclosure is a preparation method of a composite separator and the following technical solutions are used.

The preparation method of the composite separator includes following steps:

step S1: mixing the inorganic particles A, the adhesive polymer B and the non-adhesive polymer C with a solvent and stirring to obtain a mixture slurry; and
step S2: coating the mixture slurry on a surface of a porous base film and drying to obtain the composite separator.

In a third aspect, provided in the present disclosure is a lithium-ion battery and the following technical solutions are used.

A lithium-ion battery includes the above composite separator.

Firstly, by selecting a suitable adhesive polymer B, the adhesive polymer B is capable of interacting with the inorganic particles A, so that the non-adhesive polymer C is well fixed while improving the adhesion of the base layer to the porous base film and the uniformity of the distribution of the non-adhesive polymer C with larger particles in the base layer is not affected. Secondly, the maximum particle size of the non-adhesive polymer C distributed in the base layer is larger than the thickness of the base layer, so that the non-adhesive polymer C is protruding from the base layer and a gap for filling the electrolyte is formed between the base layer and the electrode sheet, which helps the electrolyte to infiltrate the electrode sheet more sufficiently, thereby improving the lithium precipitation performance of the electrode sheet. Thirdly, the non-adhesive polymer C used in the present disclosure has no adhesive property or has a weak adhesive property, but the non-adhesive polymer C is capable of generating physical adhesion between the electrode sheet and the electrode sheet under a certain temperature and pressure condition. Since the non-adhesive polymer C is capable of protruding from the surface of the base layer proximate to the electrode sheet, the non-adhesive polymer C is capable of contacting with the electrode sheet and generating a physical adhesion action with the electrode sheet while a chemical adhesion action is formed between the adhesive polymer B in the base layer and the porous basement membrane produce, i.e., a side of the base layer is physically adhered to the electrode sheet through the non-adhesive polymer C, and another side of the base layer is chemically adhered to the porous base film. Therefore, the stresses distribution on the two sides of the base layer is balanced, and the stable adhesion of the electrode sheet-non-adhesive polymer C-base layer (inorganic particles A)-adhesive polymer B-porous base film is realized, i.e., the stable adhesion between the electrode sheet and the porous base film is realized, which is conducive to improving the mechanical strength of the cell and avoid the wrinkles of the electrode sheet, thereby facilitating to improving the cycling performance of the lithium-ion battery. Fourthly, the adhesive polymer B and the non-adhesive polymer C are also capable of further improving the adhesion stability of the electrode sheet-non-adhesive polymer C-base layer (inorganic particles A)-adhesive polymer B-porous base film under the traction action of the inorganic particles A, so as to further improve the mechanical strength of the cell and reduce a degree of expansion of the electrode sheet during a charging or discharging process, thus facilitating to further improving the cycling performance of the lithium-ion battery.

It should be noted that the chemical adhesion mainly combines materials together by chemical bonding force, i.e., the bonding effect is realized by means of chemical reaction. However, the physical adhesion is mainly, adsorbed by an inter-molecular force between surfaces of materials, so as to form the adsorbed by an inter-molecular force between surfaces of a material accumulation, thereby realizing the bonding effect.

**BRIEF DESCRIPTION OF THE DRAWINGS**

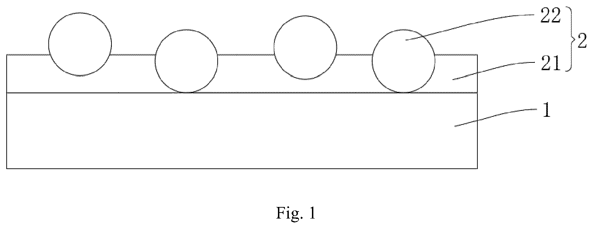

Fig. 1 shows a schematic structural diagram of a composite separator.

Description of reference numerals:

1 porous base film, 2 coating, 21 base layer, 22 non-adhesive polymer C.

**DETAILED DESCRIPTION**

In some implementations, a thickness of a base layer is denoted as d, and the thickness of the base layer satisfies $d \geq 1\ \mu m$.

In some implementations, the thickness of the base layer satisfies $1\ \mu m \leq d \leq 4\ \mu m$.

The base layer of the present disclosure has a small thickness and less material, and is capable of improving the adhesion stability of an electrode sheet and the porous base film by acting with the non-adhesive polymer C.

In some implementations, the non-adhesive polymer C includes at least one of an unsaturated nitrile monomer unit copolymer, a vinyl monomer unit copolymer, an alkenylamine monomer unit copolymer, an acrylate monomer unit copolymer, a methacrylate monomer unit copolymer, a vinyl sulfonic acid monomer unit copolymer, a vinyl acetate monomer unit copolymer, a vinyl chloride monomer unit copolymer, a diene monomer unit copolymer, and modification compounds of any one of the aforementioned copolymers.

In some implementations, the unsaturated nitrile monomer unit includes at least one of acrylonitrile and methacrylonitrile.

The vinyl monomer unit includes at least one of styrene, $\alpha$-methylstyrene, butoxystyrene, and vinyl naphthalene aromatic cluster vinyl monomer.

The alkenylamine monomer unit includes at least one of acrylamide, methacrylamide, phenylmaleimide, and derivatives thereof.

The acrylate monomer unit includes at least one of methyl acrylate, ethyl acrylate, propyl acrylate, isopropyl acrylate, n-butyl acrylate, tert-butyl acrylate, n-amyl acrylate, n-hexyl acrylate, heptyl acrylate, isooctyl acrylate, 2-ethylethyl acrylate, nonyl acrylate, decyl acrylate, lauryl acrylate, n-tetracosyl acrylate, stearyl acrylate, 2-hydroxyethyl acrylate, 2-hydroxypropyl acrylate, and alkali metal salts thereof.

The methacrylate monomer unit includes at least one of methyl methacrylate, ethyl methacrylate, propyl methacrylate, isopropyl methacrylate, n-butyl methacrylate, tert-butyl methacrylate, n-pentyl methacrylate, n-hexyl methacrylate, heptyl methacrylate, isooctyl methacrylate, 2-ethylethyl methacrylate, nonyl methacrylate, decyl methacrylate, lauryl methacrylate, n-tetracosyl methacrylate, stearyl methacrylate, 2-hydroxyethyl methacrylate, 2-hydroxypropyl methacrylate, glycerol methacrylate, cyclohexyl methacrylate, isobornyl methacrylate, allyl methacrylate, ethylene glycol dimethacrylate, and alkali metal salts thereof;

The vinyl sulfonic acid monomer unit includes at least one of vinyl sulfonic acid, methyl vinyl sulfonic acid, styrenesulfonic acid, and alkali metal salts thereof.

The vinyl acetate monomer unit copolymer includes at least one of vinyl acetate and alkali metal salts thereof.

The vinyl chloride monomer unit includes at least one of vinyl chloride and vinylidene chloride.

The diene monomer unit includes at least one of phenylmaleimide, 1,4-butadiene, and isoprene.

In some implementations, the non-adhesive polymer C includes a vinyl sulfonic acid monomer unit copolymer.

When the non-adhesive polymer C includes the vinyl sulfonic acid monomer unit copolymer, since the sulfonic acid group ($-SO_3H$) contained therein has excellent ionic conductivity, the non-adhesive polymer C is capable of cooperating with the non-adhesive polymer B to enhance the lithium ion conductivity of the composite separator, which is conducive to improving the electrical performance of the lithium-ion battery.

In some implementations, based on a weight of the coating being 100%, a weight ratio of the inorganic particles A, the adhesive polymer B, and the non-adhesive polymer C is in a range of (65%-94%):(3%-10%):(3%-25%).

By adjusting an amount of the inorganic particles A, the adhesive polymer B, and the non-adhesive polymer C, the inorganic particles A of the base layer are capable of fully playing a traction role on the adhesive polymer B and the non-adhesive polymer C, thereby significantly increase the strength of the cell, and improving the cycling performance of the cell.

In some implementations, the inorganic particles A include at least one of $SrTiO_3$, $SnO_2$, $CeO_2$, MgO, NiO, CaO, ZnO, $ZrO_2$, $Y_2O_3$, $Al_2O_3$, $TiO_2$, SiC, and AlOOH.

**Example 1**

1. Preparation of composite separator

A composite separator included a polyethylene separator and a coating. A pore diameter of the polyethylene separator was in a range of 10 nm to 400 nm and a thickness thereof was 10 $\mu$m.

The coating included a base layer and a non-adhesive polymer C (vinyl chloride-vinylidene chloride copolymer) provided on the base layer. A particle size of the non-adhesive polymer C was in a range of 0.3 $\mu$m to 15.0 $\mu$m and a particle size D50 thereof was 1.0 $\mu$m. The base layer included inorganic particles A ($Al_2O_3$) and an adhesive polymer B (polyvinylidene difluoride, polyvinyl alcohol, and sodium carboxymethyl cellulose at a mass ratio of 1:1:1). A ratio of a maximum particle size of the non-adhesive polymer C of the coating to a thickness of the base layer was 9:1.

A weight ratio of the inorganic particles A, the adhesive polymer B and the non-adhesive polymer C was 80%:7%:13%.

The composite separator was prepared using the following steps:

step S1: the inorganic particles A, the adhesive polymer B, and the non-adhesive polymer C were mixed with pure water in accordance with the above weight ratio, and was stirred to obtain a mixture slurry; and

step S2: the above mixture slurry was coated on two sides of the polyethylene separator, and dried to obtain the composite separator.

In the example, a schematic structural diagram of the composite separator was shown in Fig. 1.

2. Preparation of lithium-ion battery

2.1 Preparation of a positive electrode sheet

Lithium iron phosphate, polyvinylidene fluoride, and acetylene black at a mass ratio of 98:1:1 were uniformly mixed in an appropriate amount of N-methylpyrrolidone to obtain a positive electrode slurry, the positive electrode slurry was coated on the positive electrode collector aluminum, and then the positive electrode sheet was obtained through the processes of drying, cold pressing, slitting, and cutting.

2.2 Preparation of negative electrode sheet

Artificial graphite, sodium carboxymethyl cellulose, and acetylene black were uniformly mixed in an appropriate amount of deionized water at a mass ratio of 98:1.5:0.5 to obtain a negative electrode slurry, the negative electrode slurry was coated on the negative electrode collector copper foil, and then and then the negative electrode sheet was obtained through the processes of drying, cold pressing, slitting, and cutting.

2.3 Preparation of isolation film

The composite separator prepared above is used for the isolation film.

2.4 Preparation of electrolyte

Ethylene carbonate (EC), ethyl methyl carbonate (EMC), and diethyl carbonate (DEC) at a volume ratio of 1:1:1 were mixed to obtain a mixed solvent, a fully dried electrolyte salt of $LiPF_6$ was dissolved in the above mixed solvent, and then the electrolyte with an electrolyte salt concentration of 1.0 mol/L was obtained after uniformly mixed.

2.5 Assembly of lithium-ion battery

The positive electrode sheet, the isolation film, and the negative electrode sheet were stacked in sequence, so that the composite separator was between the positive electrode sheet and negative electrode sheet to play a role of isolation, and then the positive electrode sheet, the isolation film, and the negative electrode sheet stacked in sequence were wound to obtain an electrode assembly. The electrode assembly was hot pressed for 1 second with a temperature of 90 °C and a pressure of 1.0 tons. The electrode assembly was placed in an outer package, the electrolyte prepared above was injected into the dried secondary battery, and the lithium-ion battery was obtained through the processes of vacuum packaging, standing, chemical forming, and shaping.

**Example 2**

1. Preparation of a composite separator

A composite separator included a polypropylene separator and a coating. A pore diameter of the polypropylene separator was in a range of 10 nm to 400 nm and a thickness thereof was 5 $\mu$m.
The coating included a base layer and a non-adhesive polymer C (acrylamide copolymer) provided on the base layer. A particle size of the non-adhesive polymer C was in a range of 0.5 $\mu$m to 20.0 $\mu$m and a particle size D50 thereof was 3.0 $\mu$m. The base layer included inorganic particles A (NiO) and an adhesive polymer B (polyacrylonitrile and lithium carboxymethyl cellulose at a mass ratio of 2:1). A ratio of a maximum particle size of the non-adhesive polymer C of the coating to a thickness of the base layer was 10:1.
A weight ratio of the inorganic particles A, the adhesive polymer B and the non-adhesive polymer C was 65%:10%:25%.
The composite separator was prepared using the following steps:

step S1: the inorganic particles A, the adhesive polymer B, and the non-adhesive polymer C were mixed with pure water in accordance with the above weight ratio, and was stirred to obtain a mixture slurry; and
step S2: the above mixture slurry was coated on two sides of the polypropylene separator, and dried to obtain the composite separator.

2. Preparation of lithium-ion battery

2.1 Preparation of positive electrode sheet

Lithium iron phosphate, polyvinylidene fluoride, and acetylene black at a mass ratio of 98:1:1 were uniformly mixed in an appropriate amount of N-methylpyrrolidone to obtain a positive electrode slurry, the positive electrode slurry was coated on the positive electrode collector aluminum, and then the positive electrode sheet was obtained through the processes of drying, cold pressing, slitting, and cutting.

2.2 Preparation of negative electrode sheet

Artificial graphite, sodium carboxymethyl cellulose, and acetylene black were uniformly mixed in an appropriate amount of deionized water at a mass ratio of 98:1.5:0.5 to obtain a negative electrode slurry, the negative electrode slurry was coated on the negative electrode collector copper foil, and then and then the negative electrode sheet was obtained through the processes of drying, cold pressing, slitting, and cutting.

2.3 Preparation of isolation film

The composite separator prepared above is used for the isolation film.

2.4 Preparation of electrolyte

Ethylene carbonate (EC), ethyl methyl carbonate (EMC), and diethyl carbonate (DEC) at a volume ratio of 1:1:1 were mixed to obtain a mixed solvent, a fully dried electrolyte salt of $LiPF_6$ was dissolved in the above mixed solvent, and then the electrolyte with an electrolyte salt concentration of 1.0 mol/L was obtained after uniformly mixed.

2.5 Assembly of lithium-ion battery

The positive electrode sheet, the isolation film, and the negative electrode sheet were stacked in sequence, so that the composite separator was between the positive electrode sheet and negative electrode sheet to play a role of isolation, and then the positive electrode sheet, the isolation film, and the negative electrode sheet stacked in sequence were wound to obtain an electrode assembly. The electrode assembly was hot pressed for 1 second with a temperature of 90 °C and a pressure of 1.0 tons. The electrode assembly was placed in an outer package, the electrolyte prepared above was injected into the dried secondary battery, and the lithium-ion battery was obtained through the processes of vacuum packaging, standing, chemical forming, and shaping.

**Example 3**

1. Preparation of composite separator

A composite separator included a polyethylene separator and a coating. A pore diameter of the polyethylene separator was in a range of 10 nm to 400 nm and a thickness thereof was 20 $\mu$m.
The coating included a base layer and a non-adhesive polymer C (phenylmaleimide copolymer) provided on the base layer. A particle size of the non-adhesive polymer C was in a range of 1.0 $\mu$m to 22.0 $\mu$m and a particle size D50 thereof was 10.0 $\mu$m. The base layer included inorganic particles A ($ZrO_2$) and an adhesive polymer B (polyimide, acrylamide, and sodium carboxymethyl cellulose at a mass ratio of 1:1:1). A ratio of a maximum particle size of the non-adhesive polymer C of the coating to a thickness of the base layer was 12:1.
A weight ratio of the inorganic particles A, the adhesive polymer B and the non-adhesive polymer C was 94%:3%:3%.
The composite separator was prepared using the following steps:

step S1: the inorganic particles A, the adhesive polymer B, and the non-adhesive polymer C were mixed with pure water in accordance with the above weight ratio, and was stirred to obtain a mixture slurry; and
step S2: the above mixture slurry was coated on two sides of the polyethylene separator, and dried to obtain the composite separator.

2. Preparation of lithium-ion battery

2.1 Preparation of positive electrode sheet

Lithium iron phosphate, polyvinylidene fluoride, and acetylene black at a mass ratio of 98:1:1 were uniformly mixed in an appropriate amount of N-methylpyrrolidone to obtain a positive electrode slurry, the positive electrode slurry was coated on the positive electrode collector aluminum, and then the positive electrode sheet was obtained through the processes of drying, cold pressing, slitting, and cutting.

2.2 Preparation of negative electrode sheet

Artificial graphite, sodium carboxymethyl cellulose, and acetylene black were uniformly mixed in an appropriate amount of deionized water at a mass ratio of 98:1.5:0.5 to obtain a negative electrode slurry, the negative electrode slurry was coated on the negative electrode collector copper foil, and then and then the negative electrode sheet was obtained through the processes of drying, cold pressing, slitting, and cutting.

2.3 Preparation of isolation film

The composite separator prepared above is used for the isolation film.

2.4 Preparation of electrolyte

Ethylene carbonate (EC), ethyl methyl carbonate (EMC), and diethyl carbonate (DEC) at a volume ratio of 1:1:1 were mixed to obtain a mixed solvent, a fully dried electrolyte salt of $LiPF_6$ was dissolved in the above mixed solvent, and then the electrolyte with an electrolyte salt concentration of 1.0 mol/L was obtained after uniformly mixed.

2.5 Assembly of lithium-ion battery

The positive electrode sheet, the isolation film, and the negative electrode sheet were stacked in sequence, so that the composite separator was between the positive electrode sheet and negative electrode sheet to play a role of isolation, and then the positive electrode sheet, the isolation film, and the negative electrode sheet stacked in sequence were wound to obtain an electrode assembly. The electrode assembly was hot pressed for 1 second with a temperature of 90 °C and a pressure of 1.0 tons. The electrode assembly was placed in an outer package, the electrolyte prepared above was injected into the dried secondary battery, and the lithium-ion battery was obtained through the processes of vacuum packaging, standing, chemical forming, and shaping.

**Example 4**

1. Preparation of composite separator

A composite separator included a polyethylene separator and a coating. A pore diameter of the polyethylene separator was in a range of 10 nm to 400 nm and a thickness thereof was 20 μm.
The coating included a base layer and a non-adhesive polymer C (acrylonitrile-methacrylonitrile copolymer) provided on the base layer. A particle size of the non-adhesive polymer C was in a range of 3.0 μm to 30.0 μm and a particle size D50 thereof was 15.0 μm. The base layer included inorganic particles A ($SnO_2$) and an adhesive polymer B (polyethylene oxide and sodium carboxymethyl cellulose at a mass ratio of 2:1). A ratio of a maximum particle size of the non-adhesive polymer C of the coating to a thickness of the base layer was 15:1.
A weight ratio of the inorganic particles A, the adhesive polymer B and the non-adhesive polymer C was 90%:4%:6%.
The composite separator was prepared using the following steps:

step S1: the inorganic particles A, the adhesive polymer B, and the non-adhesive polymer C were mixed with pure water in accordance with the above weight ratio, and was stirred to obtain a mixture slurry; and
step S2: the above mixture slurry was coated on two sides of the polyethylene separator, and dried to obtain the composite separator.

2. Preparation of lithium-ion battery

2.1 Preparation of positive electrode sheet

Lithium iron phosphate, polyvinylidene fluoride, and acetylene black at a mass ratio of 98:1:1 were uniformly mixed in an appropriate amount of N-methylpyrrolidone to obtain a positive electrode slurry, the positive electrode slurry was coated on the positive electrode collector aluminum, and then the positive electrode sheet was obtained through the processes of drying, cold pressing, slitting, and cutting.

2.2 Preparation of negative electrode sheet

Artificial graphite, sodium carboxymethyl cellulose, and acetylene black were uniformly mixed in an appropriate amount of deionized water at a mass ratio of 98:1.5:0.5 to obtain a negative electrode slurry, the negative electrode slurry was coated on the negative electrode collector copper foil, and then and then the negative electrode sheet was obtained through the processes of drying, cold pressing, slitting, and cutting.

2.3 Preparation of isolation film

The composite separator prepared above is used for the isolation film.

2.4 Preparation of electrolyte

Ethylene carbonate (EC), ethyl methyl carbonate (EMC), and diethyl carbonate (DEC) at a volume ratio of 1:1:1 were mixed to obtain a mixed solvent, a fully dried electrolyte salt of $LiPF_6$ was dissolved in the above mixed solvent, and then the electrolyte with an electrolyte salt concentration of 1.0 mol/L was obtained after uniformly mixed.

2.5 Assembly of lithium-ion battery

The positive electrode sheet, the isolation film, and the negative electrode sheet were stacked in sequence, so that the composite separator was between the positive electrode sheet and negative electrode sheet to play a role of isolation, and then the positive electrode sheet, the isolation film, and the negative electrode sheet stacked in sequence were wound to obtain an electrode assembly. The electrode assembly was hot pressed for 1 second with a temperature of 90 °C and a pressure of 1.0 tons. The electrode assembly was placed in an outer package, the electrolyte prepared above was injected into the dried secondary battery, and the lithium-ion battery was obtained through the processes of vacuum packaging, standing, chemical forming, and shaping.

**Example 5**

The present example was different from Example 1 in that a particle size of the non-adhesive polymer C was in a range of 2.0 $\mu$m to 6.0 $\mu$m and a particle size D50 thereof was 4.0 $\mu$m. Other steps and parameters were consistent with those of Example 1.

**Example 6**

The present example was different from Example 2 in that a particle size of the non-adhesive polymer C was in a range of 5.0 $\mu$m to 10.0 $\mu$m and a particle size D50 thereof was 6.5 $\mu$m. Other steps and parameters were consistent with those of Example 2.

**Example** 7

The present example was different from Example 3 in that a particle size of the non-adhesive polymer C was in a range of 13.0 $\mu$m to 18.0 $\mu$m and a particle size D50 thereof was 15.0 $\mu$m. Other steps and parameters were consistent with those of Example 3.

**Example 8**

The present example was different from Example 4 in that a particle size of the non-adhesive polymer C was in a range of 15.0 $\mu$m to 25.0 $\mu$m and a particle size D50 thereof was 20.0 $\mu$m. Other steps and parameters were consistent with those of Example 4.

**Example 9**

The present example was different from Example 1 in that a ratio of a maximum particle size of the non-adhesive polymer C to a thickness of the base layer is adjusted to 18:1 while keeping the thickness of the base layer unchanged. Other steps and parameters were consistent with those of Example 1.

**Example 10**

The present example was different from Example 1 in that a ratio of a maximum particle size of the non-adhesive polymer C to a thickness of the base layer is adjusted to 1.05:1 while keeping the thickness of the base layer unchanged. Other steps and parameters were consistent with those of Example 1.

**Example 11**

The present example was different from Example 1 in that the non-adhesive polymer C was a vinyl amine monomer unit copolymer (acrylamide-methacrylamide copolymer). Other steps and parameters were consistent with those of Example 1.

**Example 12**

The present example was different from Example 1 in that the non-adhesive polymer C was an alkenylsulfonic acid monomer unit copolymer (vinyl sulfonic acid-methyl vinylsulfonic acid copolymer). Other steps and parameters were consistent with those of Example 1.

**Example 13**

The present example was different from Example 1 in that a weight ratio of the inorganic particles A, the adhesive polymer B and the non-adhesive polymer C was 80%:15%:5%. Other steps and parameters were consistent with those of Example 1.

**Example 14**

The present example was different from Example 1 in that a weight ratio of the inorganic particles A, the adhesive polymer B and the non-adhesive polymer C was 55%:15%:30%. Other steps and parameters were consistent with those of Example 1.

**Contrast Example 1**

The present example was different from Example 1 in that a maximum particle size of the non-adhesive polymer C was less a thickness of the base layer. Other steps and parameters were consistent with those of Example 1.

**Contrast Example 2**

The present example was different from Example 1 in that Adhesive polymer B was selected from aromatic polyketones. Other steps and parameters were consistent with those of Example 1.

**Test method**

I. Cycling performance of lithium-ion battery

The lithium-ion battery in the above Examples and Contrast Examples was tested for cycling performance, and the specific steps were as follows: the lithium-ion battery was charged at a constant current rate of 1 C to a charging cut-off voltage of 3.65 V at 25 °C, then charged at a constant voltage to a current of $\leq 0.05$ C, and left for 5 minutes, then the lithium-ion battery was discharged at a constant current rate of 1 C to a discharging cut-off voltage of 2.5 V and left for 30 minutes, and then a capacity C0 of the battery at this time was recorded; and the lithium-ion battery was charged and discharged in this way for 1500 cycles, and a battery capacity Clwas recorded after 1500 cycles.

$$\text{Cycle capacity retention rate of battery at } 25\,°C = C1/C0 \times 100\%.$$

II. Lithium precipitation performance test

The lithium-ion battery in the above Examples and Contrast Examples were tested for cycling performance. The test was conducted using a new Weir (BTSDA) test system, the test temperature was 25 °C, and the specific test steps were as follows: The lithium-ion battery was charged at a constant current of 1 C to 3.65 V, then charged at constant voltage to 0.05 C, and left for 10 minutes, then the lithium-ion battery was discharged at 1 C to 2.5 V and left for 10 minutes, and the lithium-ion battery was cycled for 200 cycles with the charging and discharging steps. The lithium-ion battery at the 200th cycle was disassembled, then it was observed that whether there is lithium precipitation on the negative electrode sheet, and a ratio of lithium precipitation area to the whole area of the negative electrode sheet was estimated. There was no lithium precipitation if the ratio of lithium precipitation area to the whole area of the electrode sheet was less than 5%; there was slight lithium precipitation if the ratio of lithium precipitation area to the whole area of the electrode sheet was less than 20%; and there was serious lithium precipitation if the ratio of lithium precipitation area to the whole area of the electrode sheet was equal to or more than 20%.

Table 1

| No. | Capacity retention rate after cycles/% | Lithium precipitation performance/% |
|---|---|---|
| Example 1 | 89.3 | 3.3 |
| Example 2 | 88.6 | 3.6 |
| Example 3 | 89.1 | 3.5 |
| Example 4 | 88.8 | 3.4 |
| Example 5 | 91.1 | 2.4 |
| Example 6 | 90.5 | 2.7 |
| Example 7 | 91.2 | 2.6 |
| Example 8 | 90.8 | 2.5 |
| Example 9 | 85.8 | 6.3 |
| Example 10 | 86.9 | 5.8 |
| Example 11 | 88.5 | 3.8 |
| Example 12 | 90.9 | 3.2 |
| Example 13 | 81.6 | 9.1 |
| Example 14 | 82.9 | 8.2 |
| Contrast Example 1 | 75.5 | 15.5 |
| Contrast Example 2 | 77.8 | 14.3 |

In combination with Examples 1 to 3, Contrast Examples 1 and 2, and Table 1, it can be seen that, in the present disclosure, by selecting an appropriate type of adhesive polymer B and an non-adhesive polymer C with an appropriate size paired with each other to act together with the inorganic particles A, it is capable of significantly improve the adhesion stability between the electrode sheet and the composite separator, thus preventing the cell from expansion in the process of lithium-ion battery application, and improving the lithium precipitation performance of the lithium-ion battery. The cycle capacity retention rate of the lithium-ion battery in Examples 1 to 4 is higher than the cycle capacity retention rate of the lithium-ion battery in Contrast Examples 1 and 2, and the lithium precipitation area of the electrode sheet in Examples 1 to 3 is smaller than the lithium precipitation area of the electrode sheet in Contrast Examples 1 and 2.

The adhesive polymer B and the inorganic particles A can form a base layer that stably adheres to the porous base film and the non-adhesive polymer C with a large particles can also be stably embedded in the base layer, and under a condition of a certain temperature and pressure physical adhesion is formed between the non-adhesive polymer C and the electrode sheet, so that the coating is stably adhered to the electrode sheet and the porous base film on two opposite, respectively, avoiding the wrinkles of the electrode sheet and improving the mechanical strength of the cell. In addition, the non-adhesive polymer C with the large particles can also protrude from the surface of the base layer, increasing a gap between the electrode sheet and the porous base film, and therefore not only a degree of wetting of the electrolyte on the electrode sheet is improved to a certain extent, but also a lithium ion transmission path is increased, which all contributes to improving the lithium precipitation performance of the electrode sheet.

In combination with Examples 1, 5 to 8, and Table 1, it can be seen that the capacity retention rate of the lithium-ion battery in Examples 5 to 8 is slightly improved compared with the capacity retention rate of the lithium-ion battery in Example 1. This is due to the fact that, by further optimizing the particle size of the non-adhesive polymer C to be paired with the adhesive polymer B, the adaptation between the polymer C and the base layer can be adjusted timely, and the adhesion stability of an electrode sheet - non-adhesive polymer C - base layer - adhesive polymer B - porous base film system is improved, further optimizing and improving the mechanical strength of the cell, and improving the cycle stability of the lithium-ion battery.

In combination with Example 2, 9 to 10, and Table 1, it can be seen that the cycling capacity retention rate of the lithium-ion battery in Example 1 is higher than the cycling capacity retention rate of the lithium-ion battery in Example 9, and the lithium precipitation area of the electrode sheet in Example 1 is smaller than the lithium precipitation area of the electrode sheet in Example 9. This is due to the fact that an electrolyte channel constructed by the joint action between the coating and the electrode sheet is capable of increasing the liquid retention capacity of the composite separator and form an effective lithium ion channel, and compared to Example 9 where the ratio of the maximum particle size of the non-adhesive polymer C to the thickness of the base layer is too large, the ratio of the maximum particle size of the non-adhesive polymer C to the thickness of the base layer in Example 1 is controlled to be in an appropriate range, which helps the gap between the composite separator and the electrode sheet to maintain a stronger liquid-retaining ability, so that the electrolyte in the electrolyte channel is always maintained in a relatively sufficient state. Therefore, the transfer ability of the lithium ions in the lithium-ion battery in Example 1 is maintained at a relatively good level, the polarization of the corresponding part of the electrode sheet is small and a risk of lithium precipitation of the electrode sheet is low, thereby resulting in an improvement in the overall performance of the lithium-ion battery.

The cycle capacity retention rate of the lithium-ion battery in Example 1 is higher than the cycle capacity retention rate of the lithium-ion battery in Example 10, and the lithium precipitation area of the electrode sheet in Example 1 is smaller than the lithium precipitation area of the electrode sheet in Example 10. This is due to the fact that, when the ratio of the maximum particle size of the non-adhesive polymer C to the thickness of the base layer is controlled in a suitable range (such as in Example 1), an area of the non-adhesive polymer C protruding from the base layer is relatively large, and an area of the effective area where the non-adhesive polymer C is physically adhered to the electrode sheet is large under subsequent temperature and pressure, which is conducive to improving the adhesion between the coating and the electrode sheet, thereby improving the adhesion between the porous base film and the electrode sheet, and improving the stability of the relative two surfaces of the coating that are respectively adherent to the porous base film and the electrode sheet, so as to improve the mechanical strength of the cell in Example 1, thereby improving a capability of resisting expansion and deformation of the electrode sheet during use. In addition, the electrolyte channel formed by the gap between the electrode sheet and the composite separator is favorable to the passage of a sufficient volume of electrolyte, so that the degree of wetting of the electrolyte on the electrode sheet in Example 1 is high, and thus the lithium precipitation performance of the electrode sheet in Example 1 is better than the lithium precipitation performance of the electrode sheet in Example 10.

In combination with Example 1, 11 to 12 and Table 1, it can be seen that, when the non-adhesive polymer C includes the vinyl sulfonic acid monomer unit copolymer, the cycle capacity retention rate of the lithium-ion battery is increased and the lithium precipitation area thereof is decreased. This is due to the fact that the sulfonic acid group contained in the vinyl sulfonic acid monomer unit monomer unit copolymer is capable of enhancing the lithium-ion conduction ability of the composite separator in cooperation with the non-adhesive polymer B, which is conducive to enhancing the cycling performance of the lithium-ion battery and decreasing the lithium precipitation area of the electrode sheet.

In combination with Example 1, 13 and Table 1, it can be seen that the cycle capacity retention rate of the lithium-ion battery in Example 1 is higher than that of the lithium-ion battery in Example 13, and the lithium precipitation area of the electrode sheet in Example 1 is smaller than that .of the electrode sheet in Example 13 This is due to the fact that, when the amount of the non-adhesive polymer C is higher than that of the adhesive polymer B (in Example 1), the physical adhesion between the non-adhesive polymer C and the electrode sheet can be well balanced with the chemical adhesion between the adhesive polymer B and the porous base film, which helps to improve the mechanical strength of the cell and avoid expansion of the electrode sheet in the application process, thereby resulting in excellent cycling performance of the lithium-ion battery and a small lithium precipitation area of the electrode sheet.

In combination with Example 1, Example 14 and Table 1, it can be seen that the cycle capacity retention rate of the lithium-ion battery in Example 1 is higher than the cycle capacity retention rate of the lithium-ion battery in Example 14, and the lithium precipitation area of the electrode sheet in Example 1 is smaller than the lithium precipitation area of the electrode sheet in Example 14. This is due to the fact that, when the amount of the inorganic particles A is kept in an appropriate range (in Example 1), a holding action of the inorganic particles A on the adhesive polymer B and the non-adhesive polymer C is kept at a relatively high level, which is conducive to realizing stable adhesion of the coating between the electrode sheet and the porous base film, increasing the adhesion stability between the electrode sheet and the porous base film, and avoiding wrinkles of the electrode sheet, thereby resulting in excellent cycling performance of the lithium-ion battery and a small lithium precipitation area of the electrode sheet.

**Claims**

1. A composite separator comprising a porous base film (1) and a coating (2), wherein the coating (2) is provided on a surface of the porous base film (1), the coating (2) comprises a base layer (21) and a non-adhesive polymer C (22) provided on the base layer (21), and the base layer (21) comprises inorganic particles A and an adhesive polymer B;

   a maximum particle size of the non-adhesive polymer C (22) is greater than a thickness of the base layer (21) and a particle size of the non-adhesive polymer C (22) is in a range of 0.3 $\mu$m to 30 $\mu$m;

   the adhesive polymer B comprises a first component and a second component, the first component comprises at least one of a vinyl polymer, a propylene-based polymer, an amide-based polymer, and an epoxy-based polymer, and the second component comprises a cellulose-based polymer;

   the vinyl polymer comprises at least one of polyvinylidene fluoride, polyvinylidene fluoride-co-trichloroethylene, polyvinyl acetate, polyethylene-co-vinyl acetate, polyvinyl alcohol, polyvinylpyrrolidone, and polymaleic anhydride;

   the propylene-based polymer comprises at least one of polymethyl methacrylate and polyacrylonitrile;

   the amide-based polymer comprises at least one of polyimide, acrylamide, methacrylamide, hydroxymeth acrylamide, diacetone acrylamide, N,N-diethylacrylamide, N,N-diethylmethacrylamide, N-ethylacrylamide, N-ethylmethacrylamide, N,N-dimethylacrylamide, N,N-dimethylacrylamide, N-methylacrylamide, N-isopropylacrylamide, N-isopropylmethacrylamide, and 2-acrylamido-2-phenylethanesulfonic acid;

   the epoxy-based polymer comprises at least one of polyethylene oxide and polypropylene oxide; and

   the cellulose-based polymer comprises at least one of sodium carboxymethyl cellulose and lithium carboxymethyl cellulose.

2. The composite separator according to claim 1, wherein: when the adhesive polymer B comprises the vinyl polymer and the cellulose-based polymer, the particle size of the non-adhesive polymer C (22) is in a range of 0.3 $\mu$m to 15.0 $\mu$m.

3. The composite separator according to claim 1, wherein: when the adhesive polymer B comprises the propylene-based polymer and the cellulose-based polymer, the particle size of the non-adhesive polymer C (22) is in a range of 0.5 $\mu$m to 20.0 $\mu$m.

4. The composite separator according to claim 1, wherein: when the adhesive polymer B comprises the amide-based polymer and the cellulose-based polymer, the particle size of the non-adhesive polymer C (22) is in a range of 1.0 $\mu$m to 22.0 $\mu$m.

5. The composite separator according to claim 1, wherein: when the adhesive polymer B comprises the epoxy-based polymer and the cellulose-based polymer, the particle size of the non-adhesive polymer C (22) is in a range of 3.0 $\mu$m to 30.0 $\mu$m.

6. The composite separator according to any one of claims 1 to 5, wherein: a ratio of the maximum particle size of the non-adhesive polymer C (22) to the thickness of the base layer (21) is in a range of (1.2-15):1.

7. The composite separator according to any one of claims 1 to 6, wherein: the thickness of the base layer (21) is denoted as d, and the thickness of the base layer (21) satisfies d $\geq$ 1 $\mu$m.

8. The composite separator according to claim 7, wherein: the thickness of the base layer (21) satisfies 1 $\mu$m $\leq$ d $\leq$ 4 $\mu$m.

9. The composite separator according to any one of claims 1 to 8, wherein: the non-adhesive polymer C (22) comprises at least one of an unsaturated nitrile monomer unit copolymer, a vinyl monomer unit copolymer, an alkenylamine monomer unit copolymer, an acrylate monomer unit copolymer, a methacrylate monomer unit copolymer, a vinyl sulfonic acid monomer unit copolymer, a vinyl acetate monomer unit copolymer, a vinyl chloride monomer unit copolymer, a diene monomer unit copolymer, and a modified compound of any one of the aforementioned copolymers.

10. The composite separator according to claim 9, wherein: the non-adhesive polymer C (22) comprises the vinyl sulfonic acid monomer unit copolymer.

11. The composite separator according to claim 9 or 10, wherein: the vinyl sulfonic acid monomer unit comprises at least one of vinyl sulfonic acid, methyl vinyl sulfonic acid, styrenesulfonic acid, and alkali metal salts thereof.

12. The composite separator according to any one of claims 1 to 11, wherein: based on a weight of the coating (2) being 100%, a weight ratio of the inorganic particles A, the adhesive polymer B, and the non-adhesive polymer C (22) is in a range of (65%-94%):(3%-10%):(3%-25%).

13. The composite separator according to any one of claims 1 to 12, wherein: the inorganic particles A comprise at least one of $SrTiO_3$, $SnO_2$, $CeO_2$, MgO, NiO, CaO, ZnO, $ZrO_2$, $Y_2O_3$, $Al_2O_3$, $TiO_2$, SiC, and AlOOH.

14. A preparation method of a composite separator as claimed in any one of claims 1 to 13, comprising following steps:

step S1: mixing the inorganic particles A, the adhesive polymer B and the non-adhesive polymer C (22) with a solvent and stirring to obtain a mixture slurry; and
step S2: coating the mixture slurry on a surface of a porous base film (1) and drying to obtain the composite separator.

15. A lithium-ion battery, comprising a composite separator as claimed in any one of claims 1 to 13.

Fig. 1

Europäisches
Patentamt

European
Patent Office

Office européen
des brevets

# EUROPEAN SEARCH REPORT

**Application Number**

EP 25 17 3006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/024649 A1 (HONG HAIYI [CN] ET AL) 26 January 2023 (2023-01-26) | 1-9, 12-15 | INV. H01M50/457 |
| Y | * paragraph [0010] - paragraph [0083] * | 10,11 | H01M50/446 |
| | * paragraph [0195] - paragraph [0197] * | | H01M50/414 |
| | * figures 1-3 * | | C08L63/00 |
| | * claims 1-3,9, 10, 11, 14 * | | C08L33/02 |
| | * example 1 * | | C08L29/04 |
| | ----- | | C08L23/12 |
| A | YU HAIBIN ET AL: "Recent developments of polyimide materials for lithium-ion battery separators", IONICS, vol. 27, no. 3, 15 January 2020 (2020-01-15), pages 907-923, XP037378933, ISSN: 0947-7047, DOI: 10.1007/S11581-020-03865-2 * page 916 - page 920; figures 14, 17 * * abstract * | 3-5 | H01M50/403 H01M50/429 ADD. H01M10/0525 |
| | ----- | | |
| Y | KR 2022 0074110 A (LOTTE CHEMICAL CORP [KR]) 3 June 2022 (2022-06-03) * paragraph [0014] * * paragraph [0033] - paragraph [0034] * | 10,11 | |
| | ----- | | |

**TECHNICAL FIELDS SEARCHED (IPC)**

H01M

The present search report has been drawn up for all claims

| Place of search | Date of completion of the search | Examiner |
|---|---|---|
| The Hague | 8 August 2025 | Möller-Gulland, R |

EPO FORM 1503 03.82 (P4C01)

## ANNEX TO THE EUROPEAN SEARCH REPORT
## ON EUROPEAN PATENT APPLICATION NO.

EP 25 17 3006

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2025

| Patent document cited in search report | Publication date | Patent family member(s) | | Publication date |
|---|---|---|---|---|
| US 2023024649 A1 | 26-01-2023 | CN | 115104219 A | 23-09-2022 |
| | | EP | 4109658 A1 | 28-12-2022 |
| | | JP | 7446459 B2 | 08-03-2024 |
| | | JP | 2023508241 A | 01-03-2023 |
| | | KR | 20220124821 A | 14-09-2022 |
| | | US | 2023024649 A1 | 26-01-2023 |
| | | US | 2025239729 A1 | 24-07-2025 |
| | | WO | 2022110227 A1 | 02-06-2022 |
| KR 20220074110 A | 03-06-2022 | NONE | | |

EPO FORM P0459

For more details about this annex : see Official Journal of the European Patent Office, No. 12/82